(19) Europäisches Patentamt European Patent Office Office européen des brevets

(11) **EP 3 947 885 B1**

(12) **EUROPEAN PATENT SPECIFICATION**

(45) Date of publication and mention
of the grant of the patent:
**05.03.2025 Bulletin 2025/10**

(21) Application number: **20784139.6**

(22) Date of filing: **26.03.2020**

(51) International Patent Classification (IPC):
*E06B 3/66* *(2006.01)*       *E06B 3/677* *(2006.01)*
*E06B 3/663* *(2006.01)*

(52) Cooperative Patent Classification (CPC):
**E06B 3/6612; E06B 3/663; E06B 3/66304;**
**E06B 3/677;** Y02A 30/249; Y02B 80/22

(86) International application number:
**PCT/US2020/024863**

(87) International publication number:
**WO 2020/205407 (08.10.2020 Gazette 2020/41)**

(54) **DYNAMIC MULTI-PANE INSULATING ASSEMBLY AND SYSTEM**

DYNAMISCHE MEHRSCHEIBENISOLIERANORDNUNG UND SYSTEM

ENSEMBLE ET SYSTÈME D'ISOLATION MULTI-VITRES DYNAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2019 US 201962826007 P**

(43) Date of publication of application:
**09.02.2022 Bulletin 2022/06**

(73) Proprietor: **Kattmann Elias, LLC
Alpharetta, GA 30022 (US)**

(72) Inventors:
• **ELIAS, Christian Michael
Alpharetta, GA 30022 (US)**
• **KATTMANN, Thomas Tyler
Cumming, GA 30041 (US)**
• **PRICE, Christopher Ryan
Oakwood, GA 30566 (US)**

(74) Representative: **Grättinger Möhring von
Poschinger
Patentanwälte Partnerschaft mbB
Wittelsbacherstrasse 2b
82319 Starnberg (DE)**

(56) References cited:
WO-A1-94/24398          KR-B1- 101 615 452
KR-Y1- 200 450 239      US-A1- 2016 279 895
US-A1- 2018 223 590      US-A1- 2018 223 590
US-A1- 2019 257 140

**Description**

Field of the Invention

The present disclosure generally relates to multi-pane insulating glass units ("IGUs" or "IGs") and vacuum insulating glass units ("VIGUs" or "VIGs") for use in fenestration applications (e.g., windows and doors for buildings) and any other application where an IGU or VIGU might be used. In particular, it relates to a dynamic multi-pane insulating assembly configured to maintain the thermal resistance of IGUs and VIGUs at a high level and methods of making same.

Background

insulating glass units (also known as insulating glazing units or "IGUs" or "IGs") and vacuum insulating glass units (also known as vacuum insulating glazing units or "VIGUs" or "VIGs") are known. They comprise two or more parallel but spaced-apart sheets, or panes, of glass attached and/or sealed to one another around their respective peripheries. The gap between each pair of sheets or panes of glass (also known as "lites") defines a cavity. In IGUs, the cavity is filled with air and/or other gasses such as argon, krypton or xenon, whereas in VIGUs, the gap is "filled" with or contains a reduced-pressure atmosphere or a vacuum. Spacers (also known as "stand-offs" or "suspenders") are typically disposed within the gap of IGUs and VIGUs to maintain the gap between the opposing panes. In the case of VIGUs, spacers are particularly necessary in order to support the panes of glass against the pressure of the outside air, which otherwise might distort or damage the glass, or cause the two panes of glass to come in contact with each other so as to produce a thermal "short circuit," which can undesirably provide a thermally conductive path directly through the panes of glass.

Using vacuum to increase the insulating performance of window glazing components is known, and in fact many innovative approaches have been taught in the literature over the last 75 years. It is, however, readily observed by skilled practitioners of the art that the majority of the prior work relates to low-to medium-vacuum levels, *i.e.,* vacuum levels within the range from about 760 torr (1 atmosphere of pressure at sea level) to about $10^{-3}$ torr. For purposes of this application, a "higher" level of vacuum is understood to correspond to a lower absolute pressure, *e.g.,* a vacuum level of $10^{-4}$ torr is a higher vacuum than $10^{-3}$ torr. While the literature makes infrequent reference to the measured vacuum levels in glazing components, in many cases the maintainable vacuum level must be interpreted from careful evaluation of the materials exposed to the vacuum enclosure, the methods used to create the vacuum seal and the methods used to produce/maintain the vacuum condition in the enclosed space.

While the literature describing vacuum insulating window glazing components may not rigorously define the vacuum levels, literature from other industries, such as the electronics industry, defines different vacuum levels and the types of materials and processing methods required to achieve and maintain those specified vacuum levels. The common distinction between medium and high vacuum devices is a vacuum level of $10^{-3}$ torr. In other words, the range of high vacuum levels begins at about $10^{-3}$ torr and goes higher, i.e., in the direction toward and/or past $10^{-4}$ torr. In the case of vacuum insulating glass units ("VIGUs" or "VIGs") for windows, doors and other components, where it is desirable for the VIGs to retain a prescribed minimum vacuum level for an extended operating lifetime (e.g., 25 years), a vacuum containment system capable of initially maintaining a higher level of vacuum (e.g., $10^{-4}$ torr to $10^{-5}$ torr), may be necessary for the VIG to maintain a desired degree of thermal resistance over its lifetime, i.e., as the contained vacuum degrades.

One purpose of high vacuum insulating glass units ("HVIGUs") is to provide lower levels of heat losses between temperature controlled spaces and non-temperature-controlled spaces, or between different temperature controlled spaces, that are separated by this glazing unit (i.e., compared to VIGUs with low or medium vacuum levels). In such cases, providing this desired lower level of heat transfer over a long period of time is desirable. Since the ambient conditions in the uncontrolled space, most commonly the external atmospheric environment, produce a variety of stresses including thermal, pressure and mechanical vibration, and since, to a lesser extent, this also happens in the conditioned space, various embodiments of the HVIGU will be more or less capable of surviving the applied stresses while maintaining the desired minimum vacuum level. Thus, the design lifetime, i.e., the period of time that the HVIGU will maintain its desired level of performance, is one of the performance features of the HVIGU.

As previously described, IGUs, VIGUs and HVIGUs are typically constructed using at least two spaced-apart sheets or panes of glass, each of some prescribed thickness. The gap between two adjacent glass sheets or panes defines a cavity. In IGUs, the cavity is filled with air or other gasses such as argon, krypton or xenon, whereas in VIGUs and HVIGUs, the gap is "filled" with a reduced pressure atmosphere or a vacuum. Spacers (also known as "stand-offs" or "pillars") are typically disposed within the gap of IGUs, VIGUs and HVIGUs to maintain the gap. In the case of VIGUs and HVIGUs, spacers are particularly necessary in order to support the sheets against the pressure of the outside air, which otherwise might distort or damage the glass, or cause the two panes of glass to come in contact with each other so as to produce an undesirable thermal short circuit.

Conventionally, these glass panes are then sealed, typically along the edges, using some arrangement of sealing elements which are intended to isolate the evacuated volume from the surrounding atmospheric pressure. Since the primary objective of the VIGU or HVIGU is to provide a low thermally-conductive barrier between environmental spaces, each of which may have a higher or lower temperature with respect to the other, it is obvious to skilled practitioners of the art that the two panes of glass may reach temperature levels which vary distinctly from each other. In fact, for a given space-to-space temperature differential, the pane-to-pane temperature differential will typically increase as a function of reduced thermal conductivity of the VIGU or HVIGU. As a result of the temperature differential between the panes of glass, the panes may expand and contract differentially. This may also introduce differential movement of the spacers relative to one or both panes of glass.

Vacuum insulated glass units (VIGUs/HVIGUs) are of interest for window applications and particularly greenhouse window systems because of their extremely high insulating properties, with center-of-glass insulating or thermal resistance R values as high as R- 13 or more, expressed in US units of British Thermal Units as ft$^2$ F hr/Btu, which equals to an R value of 2,3 K*m$^2$/W expressed in SI units (conductive U-Values or U-Factors of 0.077 or lower, expressed in US units of BTU/(hr F ft$^2$), which equals to 0,243 W/(m$^2$*K) expressed in SI units).

For these and other reasons, there is a need to provide a dynamic multi-pane insulating assembly with center-of-glass insulating or thermal resistance R values as high as R- 13 or more with improved dynamic maintenance of the thermal resistance R values at a desired high level over the course of the lifetime of the installation of the assembly in view of the ever changing internal and external environmental factors.

US 2018/223590 A1 discloses a vacuum insulating glass unit with two panes assembled in a spaced-apart configuration so as to have a between-pane space located between them. The between-pane space has a high vacuum. The vacuum insulating glass unit also includes a bleed chamber filled with an insulative gas at a pressure higher than atmospheric pressure and configured such that over time insulative gas from the bleed chamber diffuses into the between-pane space. In particular, document US 2018/223590 A1 discloses a dynamic multi-pane assembly comprising an interior pane that is gas permeable; a first exterior pane spaced from a first side of the interior pane and defining an evacuated gap between the first side of the interior pane and the first exterior pane, the evacuated gap having a predetermined thickness within which a vacuum is drawn; a second exterior pane spaced from a second side of the interior pane and defining a pressurized gap between the second side of the interior pane and the second exterior pane; a vacuum source in communication with the evacuated gap; a source of pressurized gas in communication with the pressurized gap; wherein the source of pressurized gas is pressurized at a set level that is greater than the pressure within the evacuated gap, and wherein gas from the pressurized gap permeates through the interior pane and into communication with the evacuated gap.

The invention is set out in the independent claims. Further developments are given in the dependent claims.

The present system provides, among other things, a dynamic multi-pane insulating assembly and system including methods for dynamically maintaining the thermal resistance value of the assembly and system. In one embodiment, the dynamic multi-pane insulating assembly and system comprises:
an interior pane; a first exterior pane; a second exterior pane; a vacuum source; and a source of pressurized gas. In this aspect, an evacuated gap having a predetermined thickness is defined between the interior pane and the first exterior pane into which a vacuum can be drawn. Similarly, the second exterior pane is spaced from the interior pane and defines a pressurized gap between the interior pane and the second exterior pane.

In operation, the vacuum source is placed into communication with the evacuated gap to maintain the vacuum present in the evacuated gap at a desired vacuum level. The source of pressurized gas is placed in communication with the respective pressurized gap to pressurize the gas within the pressurized gap to a desired set level, which is greater than or equal to a barometric pressure of the environment that is external to the dynamic multi-pane insulating assembly and system. Thus, in the closed system, pressurized gas from the pressurized gap permeates through the interior pane, which is gas permeable, and into communication with the vacuum present in the evacuated gap.

In another aspect, the dynamic multi-pane insulating assembly and system further comprises a control assembly that includes a processor that is in communication with the source of vacuum and the source of pressurized gas. A first and second pressure sensor are provided. In this aspect, the first pressure sensor is in communication with the processor and the evacuated gap and the second pressure sensor is in communication with the processor and the pressurized gap. In operation, the processor, in response to sensed pressure from at least one of the first and second pressure sensors, is configured to selectively actuate at least one of the source of vacuum and the source of pressurized gas to maintain a set level of vacuum within the evacuated gap at a desired level.

The control assembly can further comprise a third pressure sensor that is in in communication with the external environment. In this aspect, the processor, in response to sensed pressure from the third pressure sensor and at least one of the first and second pressure sensors can be configured to selectively actuate at least one of the source of vacuum and the source of pressurized gas to maintain the set level of vacuum within the evacuated gap and the set level of pressure within the pressurized gaps at the desired level.

The control assembly can further comprise a fourth pressure sensor that is in in communication with the environment enclosed by the dynamic multi-pane insulating assembly. In this aspect, the processor, in response to sensed pressure from the fourth pressure sensor and at least one of the first, second, and third pressure sensors can be configured to selectively actuate at least one of the source of vacuum and the source of pressurized gas to maintain the set level of vacuum within the evacuated gap and the set level of pressure within the pressurized gaps at the desired level.

Various implementations described in the present disclosure can include additional systems, methods, features, and advantages, which can not necessarily be expressly disclosed herein but will be apparent to one of ordinary skill in the art upon examination of the following detailed description and accompanying drawings.

## DESCRIPTION OF THE FIGURES

The features and components of the following figures are illustrated to emphasize the general principles of the present disclosure. Corresponding features and components throughout the figures can be designated by matching reference characters for the sake of consistency and clarity.

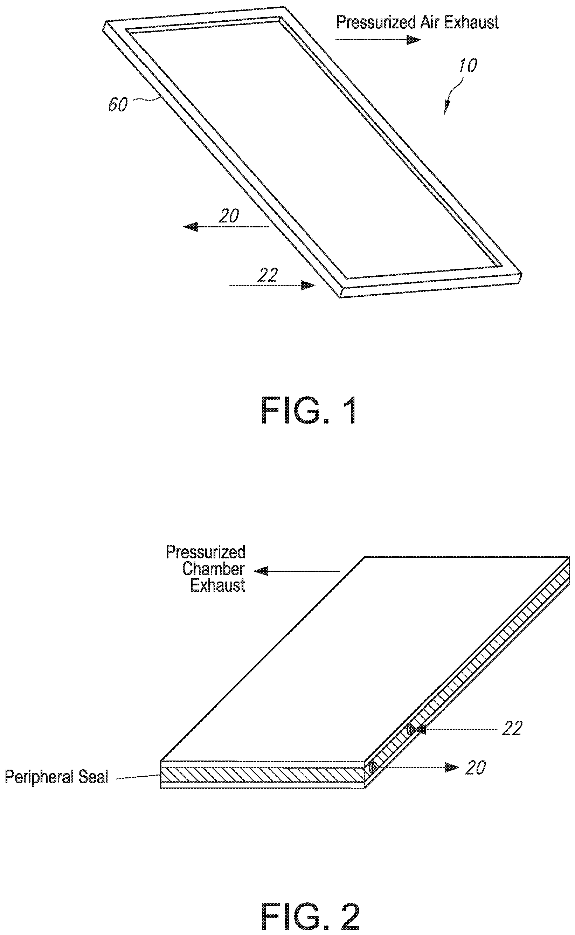

Figure 1 is a schematic drawing illustrating generally one embodiment of a dynamic multi-pane insulating assembly and system and an environment in which it is used.

Figure 2 is a schematic drawing illustrating generally one embodiment of a dynamic multi-pane insulating assembly and system coupled to a source of vacuum and a source of pressurized gas.

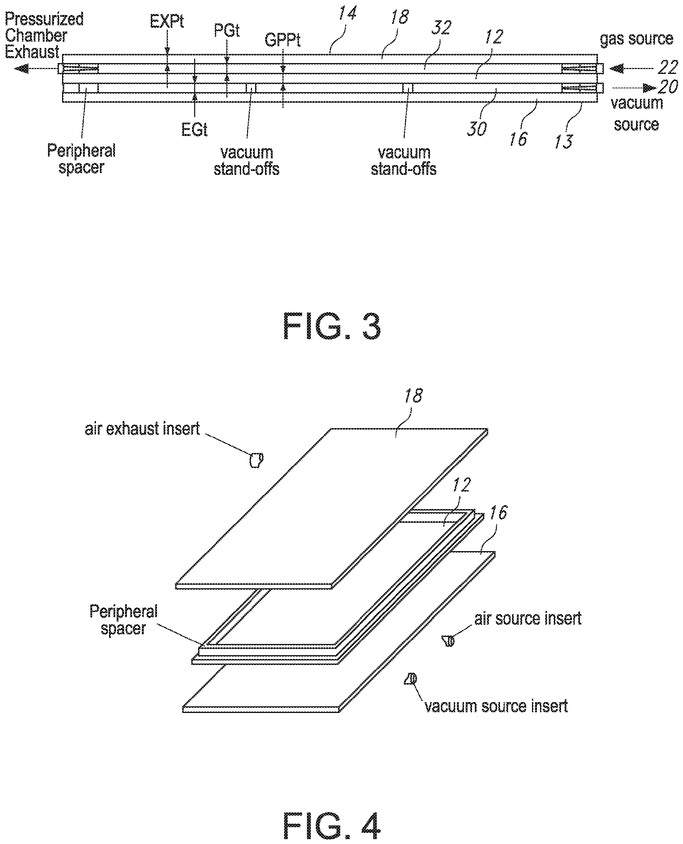

Figure 3 is a schematic cross-sectional view of one embodiment of a dynamic multi-pane insulating assembly and system illustrated in Figure 2, showing multiple panes hermetically mounted therein a frame of the assembly. The multiple panes including a gas permeable interior pane and a first exterior pane, which defines an evacuated gap having a predetermined thickness into which a vacuum can be drawn from a source of vacuum. The multiple panes further include a second exterior pane defining a second pressurized gap between the gas permeable interior pane and the second exterior pane, which is in communication with a source of pressurized gas. Figure 3 also shows vacuum stand-offs or spacers being positioned between the interior pane and the first exterior pane.

Figure 4 is a schematic exploded view of one embodiment of a dynamic multi-pane insulating assembly and system illustrated in Figure 2.

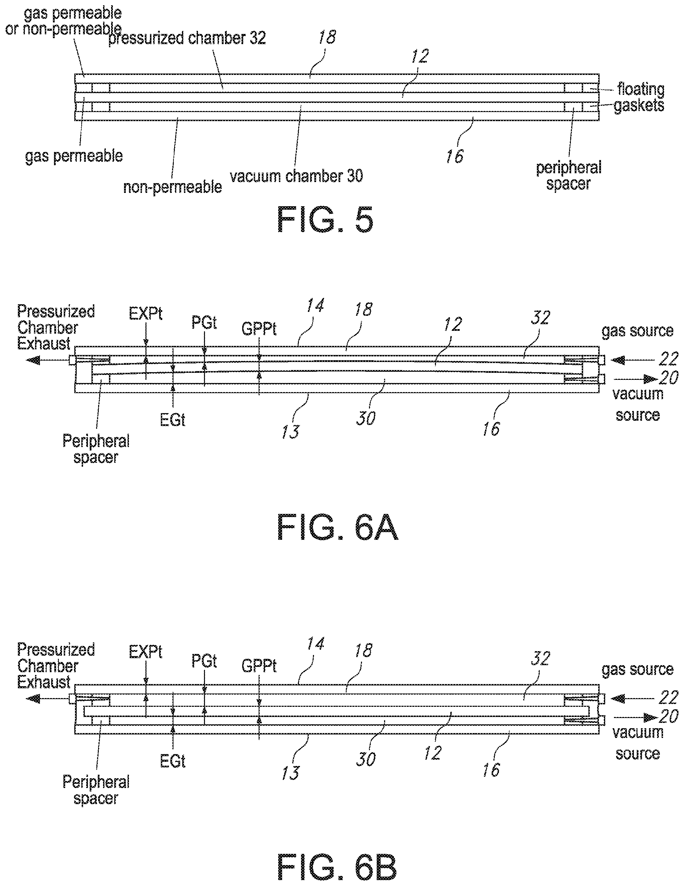

Figure 5 is a schematic cross-sectional drawing illustrating generally one embodiment of a dynamic multi-pane insulating assembly showing a polymeric gas permeable interior pane and respective first and second exterior panes spaceably and sealably mounted within the dynamic multi-pane assembly in a floating gasket configuration.

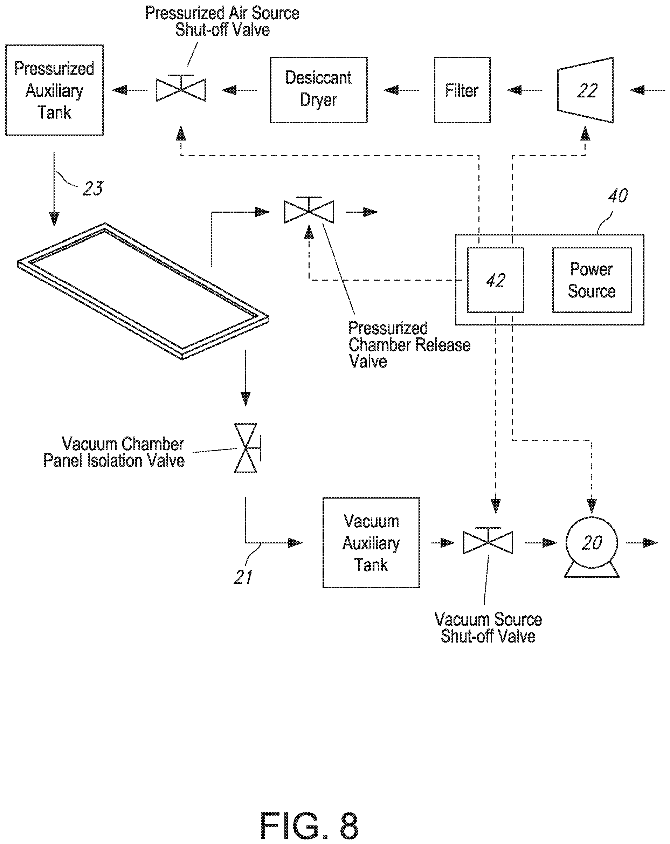

Figures 6A and 6B are schematic cross-sectional drawings illustrating generally one embodiment of a dynamic multi-pane insulating assembly showing a convex shaped polymeric gas permeable interior pane and respective first and second exterior panes spaceably and sealably mounted within the dynamic multi-pane assembly in a floating gasket configuration. Figure 8A showing the multi-pane insulating assembly in an unloaded condition and Figure 8B showing the multi-pane insulating assembly in a loaded condition.

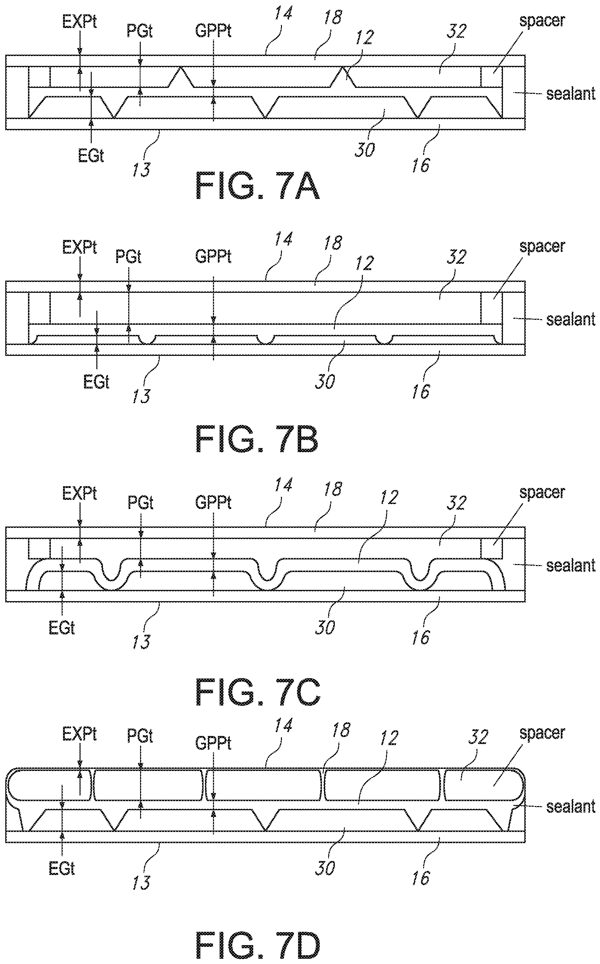

Figures 7A - 7D are schematic cross-sectional drawings illustrating generally embodiments of a dynamic multi-pane insulating assembly showing a polymeric gas permeable interior pane and respective first and second exterior panes spaceably and sealably mounted within the dynamic multi-pane assembly with spacers being positioned between the interior pane and the first exterior pane. It is contemplated that the spacers can be discrete point spacers that extend from at least one of the surface of the polymeric gas permeable interior pane and are distributed across the at least one of the surface as desired. It is further contemplated that the spacers can be distributed in a desired array or can be distributed randomly. Still further, the spacers can extend the substantial elongate length of the polymeric gas permeable interior pane to form a rib shape having a desired cross-section. Figure 7A shows exemplary extruded standoffs; Figure 7B shows exemplary 3D printed standoffs; Figure 7C shows exemplary thermoformed standoffs; and Figure 7D shows an exemplary extruded twin wall embodiment with standoffs.

Figure 8 is a schematic diagram illustrating generally one embodiment of a dynamic multi-pane insulating assembly and system coupled to a source of vacuum and a source of pressurized gas and showing a control assembly in communication with the dynamic multi-pane insulating assembly and the source of vacuum and the source of pressurized gas.

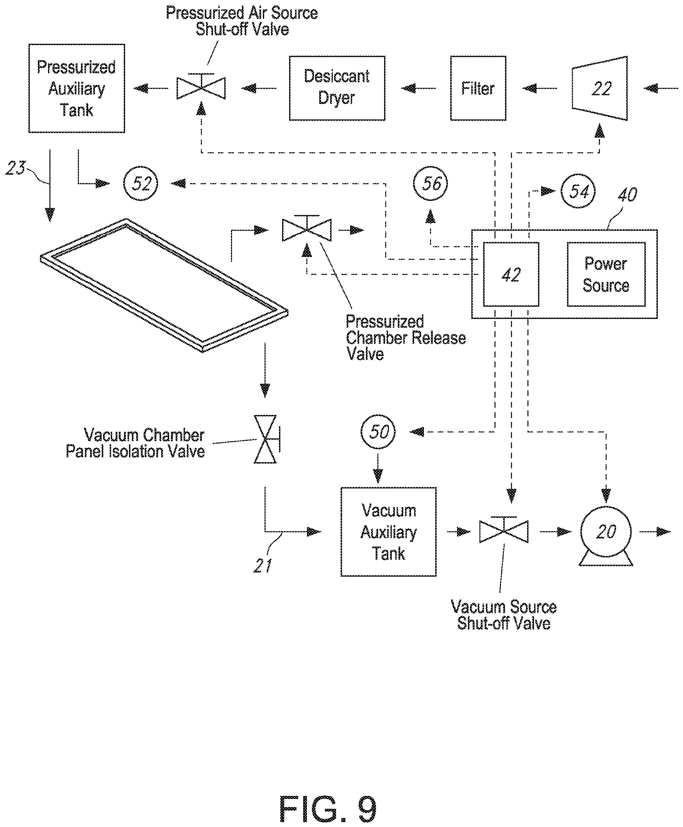

Figure 9 is a schematic diagram illustrating one aspect of a control assembly that includes several different inputs to modify the rate at which pressurized gas and/or vacuum is delivered to the dynamic multi-pane insulating assembly, in one aspect the figures shows a control assembly configured to receive at least one signal from a pressure sensing circuit, at least one signal from a vacuum pressure sensing circuit, and at least one signal from an external environment pressure sensing circuit through which a processor of the control assembly can be configured to recognize the pressure level within the respective signals and showing the processor configured to send at least one signal to at least one of the source of vacuum and the source of pressurized gas to maintain the pressure level within the pressurized gap of the dynamic multi-pane insulating assembly and the vacuum level within the evacuated gap of the dynamic multi-pane insulating assembly at desired levels, which allows for the dynamic multi-pane insulating assembly to have a desired and selectable level of thermal resistance.

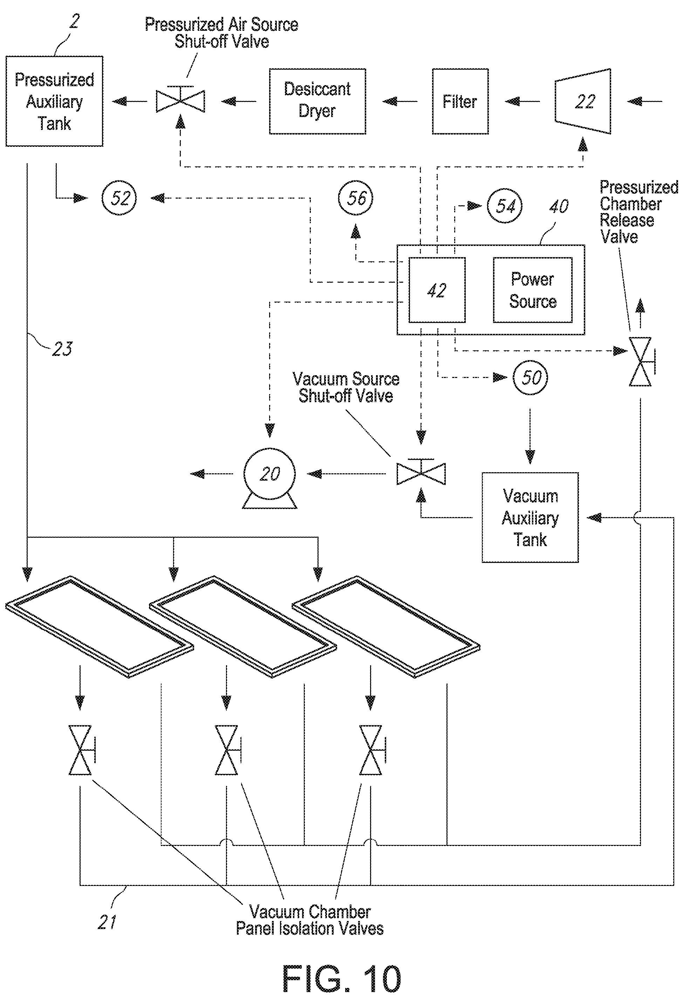

Figure 10 is a schematic diagram illustrating generally one embodiment of an insulating system comprising a plurality of multi-pane insulating assemblies coupled to a source of vacuum and a source of pressurized gas

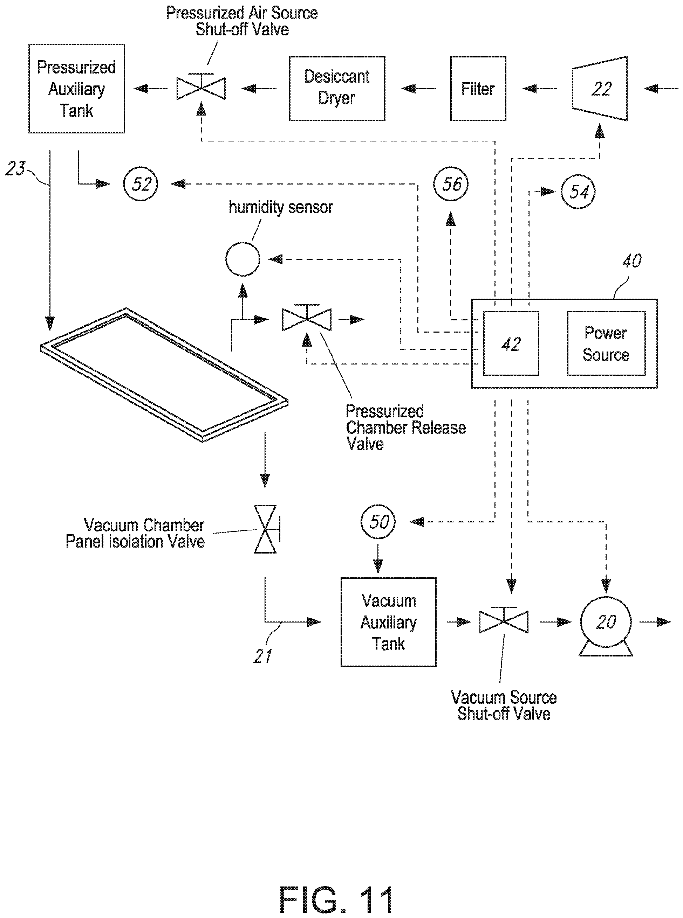

Figure 11 is a schematic diagram illustrating generally one embodiment of an insulating system comprising a multi-pane insulating assembly coupled to a source of vacuum and a source of pressurized gas and showing humidity and/or moisture sensors coupled to the control assembly.

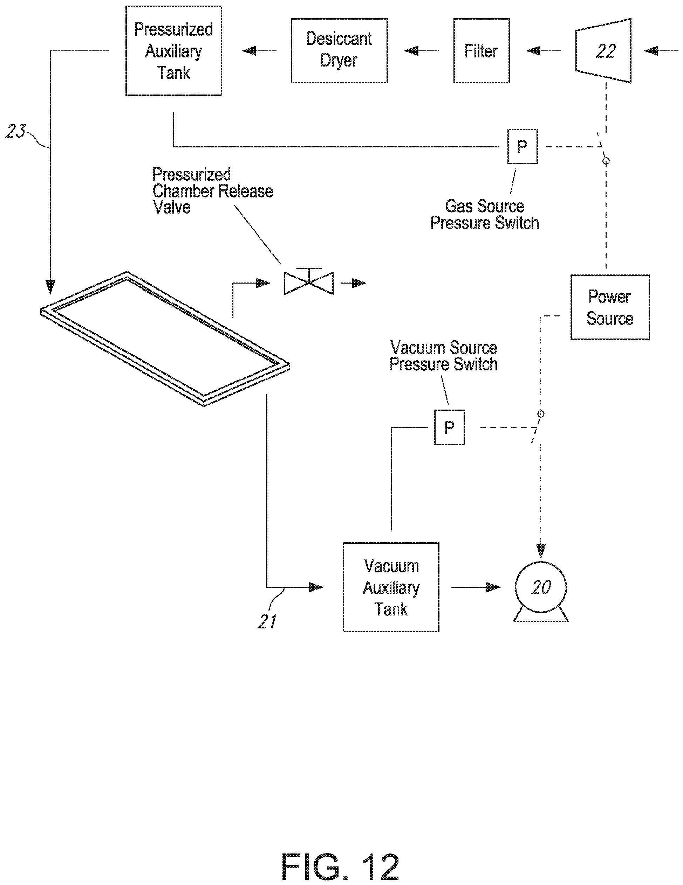

Figure 12 is a schematic diagram illustrating generally one embodiment of an insulating system comprising a multi-pane insulating assembly coupled to a source of vacuum and a source of pressurized gas and showing the control system coupled to a pair of pneumatic pressure switches.

## DETAILED DESCRIPTION

The following description of the invention is provided as an enabling teaching of the invention in its best, currently known embodiment.

The present methods and systems can be understood more readily by reference to the following detailed description of preferred embodiments and the examples included therein and to the Figures and their previous and following description.

The present system provides, among other things, a dynamic multi-pane insulating assembly and system 10 including methods for dynamically maintaining the thermal resistance value of the assembly and system. In one embodiment, the dynamic multi-pane insulating assembly and system 10 comprises an interior pane 12, which is gas permeable; a first exterior pane 16; a second exterior pane 18; a vacuum source 20; and a source of pressurized gas 22. In this aspect, the first exterior pane 16 is spaced from a first side 13 of the interior pane 12 and defines an evacuated gap 30 having a predetermined thickness between the interior pane 12 and the first exterior pane 16 into which a vacuum is drawn. The second exterior pane 18 is spaced from a second side 14 of the interior pane 12 and defines a pressurized gap 32 between the interior pane 12 and the second exterior pane 18.

Various embodiments of this invention relate to vacuum systems and pressurization systems comprising, without limitation, a plurality of dynamic multi-pane insulating assemblies whose vacuum spaces are connected to one another by ducts or conduits and to one or more vacuum pumps and whose pressurized spaces are connected to one another by ducts or conduits and one or more pressure pumps that operate during the service lives of the plurality of dynamic multi-pane insulating assemblies. A duct or conduit herein is any enclosure capable of allowing gas flow. By way of example only, and without limitation, a duct or conduit may comprise tubing, pipes, valves, pumps, and interconnections and fittings such as tees, flanges, and manifolds. The vacuum and pressurization pumps maintain most of the vacuum spaces and pressurized spaces at service pressures for a time period of indefinite duration or for an indefinite number of time periods of indefinite duration for the purpose of reducing heat conduction and convection through the residual gasses in the vacuum spaces.

In operation, the vacuum source 20 is placed into communication with the evacuated gap 30 to maintain the vacuum present in the evacuated gap 30 at a desired vacuum level. The source of pressurized gas 22 is placed in communication with the pressurized gap 32 to pressurize the gas within the pressurized gap 32 to a desired set level. In one aspect, the set level for the pressurized gap is greater than or equal to a barometric pressure of environment that is external to the dynamic multi-pane insulating assembly and system 10. The set level for the pressurized gap is greater than the pressure existing within the evacuated gap. Thus, in the closed system, pressurized gas from the pressurized gap 32 permeates through the respective permeable interior pane 12 and into communication with the vacuum present in the evacuated gap 30. As one skilled in the art can appreciate, the vacuum within the evacuated gap 30 can be a partial vacuum. In a further operational aspect, the vacuum level within the evacuated gap 30 is selectively configured to maintain the thermal resistance of the assembly at a desired level. It is contemplated that there may be some gas losses from the pressurized gap 32 to the evacuated gap 30 through the gaskets and the like that are used to seal the respective pane of the dynamic multi-pane insulating assembly and system 10, but those gasket losses are minor compared to the gas passage through the gas permeable interior pane 12.

The dynamic multi-pane insulating assembly and system 10 theoretically permits heat transfer via visible light while minimizing convective and conductive heat transfer. In the case of convective and conductive heat transfer, the dynamic multi-pane insulating assembly and system **10** acts as an insulator. As described herein, the dynamic multi-pane insulating assembly defines an evacuated gap **30** between the first exterior pane and the interior pane into which a vacuum can be drawn and the interior pane and the second exterior pane define the pressurized gap **32**. In one aspect, it is desired that the evacuated gap **30** be sized to create a sufficiently large vacuum chamber volume in order to allow for the desired level of molecular diffusion throughout the vacuum chamber towards the low pressure region or vacuum pump inlet.

In operation, it is contemplated that the relative thickness of the pressurized gap **32** can affect the convective heat transfer taking place between the inner face of second exterior pane **18** and the second side **14** of the interior pane **12** in the air regime. In a further aspect, a decrease in the thickness of the pressurized gap **32** can result in lower coefficients of convection under a certain threshold thickness.

Increasing the predetermined distance between the inside surface of the interior pane **12** and the first exterior pane **16** can increase the total thermal resistance (R) by increasing $l_{vc}$, as calculated by:

$$R = \frac{l_{gp}}{k_{pc}} + \frac{l_{ext}}{k_{ext}} + \frac{l_{np}}{k_{np}} + \frac{1}{h_g} + \frac{A_{so}+A_v}{\frac{A_{so}k_{so}}{l_{vc}} + h_v A_v}$$

where,

| Variable | Unit | Description |
|---|---|---|
| $l_{vc}$ | m | Vacuum chamber thickness |
| $l_{gp}$ | m | Gas permeable pane thickness |
| $k_{pc}$ | W/m*K | Polycarbonate coefficient of conduction |
| $k_{ext}$ | W/m*K | External outer pane coefficient of conduction |
| $k_{np}$ | W/m*K | Non-permeable pane coefficient of conduction |
| $l_{ext}$ | m | External outer pane thickness |
| $l_{np}$ | m | Non-permeable pane thickness |
| $h_g$ | W/m²K | Gas chamber coefficient of convection |
| $A_{so}$ | m² | Stand-off coverage area |
| $A_v$ | m² | Vacuum coverage area |
| $k_{so}$ | W/m*K | Stand-off coefficient of conduction |
| $h_v$ | W/m²K | Vacuum chamber heat transfer coefficient |

In a further aspect, it is contemplated that the pressurized gap **32** can be selectively pressurized with dry (*i.e.*, low humidity air as described herein) to an operating pressure level sufficient to negate the water vapor pressure in the surrounding (exterior) environment. For example, assuming ideal gas behavior (valid for $P_{atm} < 5$ atm), the operating pressure level required to negate the water vapor pressure is equal to the external atmospheric pressure. In operation, it is contemplated that pressure source can provide above atmospheric pressure, for example and without limitation, between about $10^{-2}$ to about $10^{-6}$ ATM gauge pressure, or between about $10^{-3}$ to about $10^{-8}$ ATM gauge pressure. It is desired to minimize moisture in the system as moisture can degrade the performance and/or structural integrity of the system, especially in those aspects in which the gas permeable pane comprises polymer materials. Thus, it is preferred that the relative humidity of the gas within the system is low as described in more detail herein.

Optionally, in an embodiment in which the set level for the pressurized gap is set to exceed or be greater than the pressure existing within the evacuated gap, it is contemplated that the set level can be less than the exterior barometric level. In this exemplary aspect, the set level of the pressurized gap can range from a negative vacuum pressure to a positive pressure that is greater than or equal to a barometric pressure of environment. In operation, it is contemplated that pressure source can provide gas pressurized between about -0.9999 ATM gauge pressure to about $10^{-3}$ ATM gauge pressure.

Service pressure for the evacuated gap **30** can mean, without limitation. any gas pressure that significantly reduces heat conduction and convection through a gas or a mixture of gases such as air within the evacuated gap **30** and can depend on the dimensions of the vacuum space, which may include, without limitation, the dimensions between the first exterior pane **16** and the first side **13** of the interior pane **12** of the dynamic multi-pane system and/or the elements of a spacer assembly defining the evacuated gap **30**. It is contemplated that the gas load for the evacuated gap **30** can have multiple sources that may include, without limitation, gas permeation through the gas permeable interior pane **12** from the pressurized gases present in the pressurized gap **32;** outgassing of gases that have been absorbed in the materials surrounding the evacuated gap **30** or materials in communication with the evacuated gap **30;** and evolution of gas species and materials generated by the interior panes **12**. It is contemplated that the largest source of gas loading for the evacuated gap **30** will comprise gas permeation through the gas permeable interior pane **12** from the pressurized gases present in the adjoining pressurized gap **32**. It is further contemplated that the outgassing from the materials forming the interior pane **12** will be negligibly small and thus may not be a factor.

The vacuum source **20** can comprise, without limitation, valves, frit screens, temperature sensors, pressure sensors, air compressors, compressed air lines and pneumatically actuated devices, pressure switches, pressure manifolds, relays, solenoids, electrical cable, batteries, electric power generators, pumps, backup pumps, automated control systems, pump controllers, active and passive noise reduction systems, computers, computer cables, and computer programs. In part, and without limitation, it is contemplated that a vacuum source **20** can contribute to maintaining the vacuum pressures within the evacuated gap **30** of the dynamic multi-pane insulating assemblies by removing gases and gas species that permeate from the pressurized gap **32** into the evacuated gap through the materials forming the gas permeable interior pane. In part, and without limitation, it is contemplated that the vacuum source **20** can contribute to maintaining the vacuum pressures within the evacuated gap of the dynamic multi-pane insulating assemblies by removing gases and gas species that enter the evacuated gap through leaks or less than perfect seals. In some embodiments, the vacuum source **20** comprises at least $10^{-1}$ ATM. This includes embodiments in which the vacuum source **20** comprises at least $10^{-2}$ ATM, at least $10^{-3}$ ATM, at least $10^{-4}$ ATM, at least $10^{-5}$ ATM, or at least $10^{-6}$ ATM. In a further optional aspect, the vacuum source **20** can comprise between about $10^{-1}$ ATM to about $10^{-9}$ ATM.

Similarly, it is contemplated that the source of pressurized gas **22** can comprise, without limitation, valves, frit screens, temperature sensors, pressure sensors, air compressors, compressed air lines and pneumatically actuated devices, relays, solenoids, electrical cable, batteries, electric power generators, pumps, backup pumps, automated control systems, pump controllers, active and passive noise reduction systems, computers, computer cables, and computer programs. In part, and without limitation, it is contemplated that the source of pressurized gas **22** can contribute to maintaining the gas pressure within the pressurized gap **32** of the dynamic multi-pane insulating assemblies at a desired level to ensure that the gases can permeate into the evacuated gap. In some embodiments, the source of pressurized gas **22** comprises providing pressurized gas at a set level greater than 1 atmosphere (ATM). This includes embodiments in which the source of pressurized gas **22** provides pressurized gas at a set level between about 1.01 ATM to about 1.0005 ATM (about 102340 pascals to about 101375 pascals, and preferably between about 1.001466 ATM to about 1.00001 ATM (about 101,500 pascals to about 101,300 pascals).

In one aspect, the pressurized gas can comprise, without limitation, one or more of: air, nitrogen, argon, krypton, xenon and the like. If the pressurized gas comprises air, it is contemplated that the pressurized air supplied to the pressurized gaps **32** will comprise air having a relatively low humidity. For this disclosure, relatively low humidity is defined as a humidity of less than about 30%, preferably, less than about 20%, more preferably less than about 10%, and still more preferred, less than about 1%. In another aspect, relatively low humidity can be defined as a humidity of between about 10.0 to 0.1 %. Optionally, it is contemplated that pressurized air entering the pressurized gap 32 can pass through a conventional desiccant device to ensure that the relative humidity of the pressurized gas entering the respective first and second pressurized gaps has the desired relatively low humidity value.

In one aspect, the interior pane **12** can be formed of a substantially transparent material that is formed into a sheet. In one non-limiting example, it is contemplated that the interior pane **12** can comprise a polymer material, such as acrylic, polycarbonate, and the like. The polymer material can also comprise polymer materials containing low concentrations of strength enhancing particles or, optionally, composite systems containing the aforementioned exemplary polymer materials positioned in alternate layers with polyethylene terephthalate and the like. The sheet forming the interior pane **12** can comprise, without limitation, any polymeric material that is preponderantly flat with a substantially even thickness but which may also have raised or contoured areas in regions that may function to maintain a space and separation between the otherwise flat and even thickness regions of the interior pane **12** and the first exterior pane **16.**

Optionally, as shown in Figures 6A and 6B, the sheet forming the interior pane **12** can comprise, without limitation, any polymeric material that has a convex shape in cross-section (with the apex of the convex portion being positioned closer to the second exterior pane 18 than the first exterior pane 16 in a static, un-loaded position) with a substantially even thickness but which may also function to maintain a space and separation between the otherwise flat and even thickness regions of the interior pane **12** and the first exterior pane **16**. In this aspect, it is contemplated that the application of pressure in the pressurized gap 32 and vacuum to the evacuated gap **30** will urge the interior pane to bias inwardly toward the first exterior pane **16**. In one preferred aspect and as shown in the loaded condition in Figure 6B, the application of pressure in the pressurized gap 32 and vacuum to the evacuated gap **30** will urge the interior pane **12** to bias inwardly toward the first exterior pane 16 such that the interior pane **12** is substantially planer. In another preferred aspect, the application of pressure in the pressurized gap 32 and vacuum to the evacuated gap **30** will urge the interior pane **12** to bias inwardly toward the first exterior pane 16 such that the interior pane **12** is spaced from and maintains separation between the otherwise flat and even thickness regions of the interior pane **12** and the first exterior pane **16**.

It is contemplated that a sheet forming the gas permeable pane can have coatings and/or films applied thereto all or respective portions of the sheet. Such coatings and/or films can include, without limitation light diffusing, Ultraviolet, and/or infrared coatings and/or films. Optionally, the permeable interior pane can have active and or passive devices or components imbedded within it or attached to a surface.

Optionally, it is contemplated that the interior pane **12** can be formed of glass material that can comprise, without limitation, comprise tempered glass; laminated glass, such as, for example, glass sheets bonded together by a polymer, electrochromic glass, photochromic glass, and the like.

In one aspect, the interior pane **12** has a predetermined thickness (GPPt). In some embodiments, the predetermined thickness of the interior pane **12** can comprise at least 2 millimeters. This includes embodiments in which predetermined thickness of the interior pane **12** comprises at least 3 millimeters, at least 4 millimeters, or at least 5 millimeters. Alternatively, it is contemplated that the predetermined thickness of the interior pane **12** can be between about 2 millimeters to about 50 millimeters, preferably between about 3 millimeters to about 40 millimeters, and more preferred between about 6 millimeters to about 25 millimeters.

In another aspect, the respective first and second exterior panes **16, 18** can be formed of a substantially transparent material. In one non-limiting example, it is contemplated that the first and second the first and second exterior panes **16, 18** can comprise a glass material formed into a glass sheet. The glass material can, without limitation, comprise tempered glass; laminated glass, such as, for example, glass sheets bonded together by a polymer, electrochromic glass, photochromic glass, and the like. The respective glass sheets forming the first and second exterior panes **16, 18** can comprises, without limitation, any glass material that is preponderantly flat with substantially even thickness but which may also have raised or contoured areas in regions that may function to maintain a space and separation between the otherwise flat and even thickness regions of the first and second exterior panes **16, 18** and the flat and even thickness regions of the respective first and second side **13, 14** of the adjacent interior pane **12**. It is contemplated that a glass sheet can have coatings applied thereto all or respective portions of the sheet. It is also contemplated that the glass sheet can have active and or passive devices or components imbedded within it or attached to a surface.

Optionally, like the previously described interior pane **12,** it is contemplated that at least one of the first and second exterior panes **16, 18** can comprise a polymer material, such as acrylic, polycarbonate, and the like, that is formed into a sheet. For example, and not meant to be limiting, it is contemplated that the first exterior pane **16** can comprise a glass material formed into a glass sheet and the second exterior pane **18** can comprise a polymer material, such as acrylic, polycarbonate, and the like, that is formed into a sheet. In a further example, the first exterior pane **16** can comprise a polymeric material such as polycarbonate, polymethyl methacrylate, or polyethylene terephthalate. In this exemplary aspect, the first exterior pane **16** can have a substantially greater thickness than the gas permeable interior pane **12** in order to substantially decrease the amount of air permeation through the first exterior pane **16** relative to internal pane **12**.

In these exemplary aspects, the glass material that can comprise, without limitation, tempered glass; laminated glass, such as, for example, glass sheets bonded together by a polymer, electrochromic glass, photochromic glass, and the like, and the polymer material can comprise polymer materials containing low concentrations of strength enhancing particles or, optionally, composite systems containing the aforementioned exemplary polymer materials positioned in alternate layers with polyethylene terephthalate and the like.

Each of the respective first and second gas exterior panes has a predetermined thickness ($EXP_t$). Optionally, the respective first and second exterior panes **16, 18** can have the same or different predetermined thicknesses. In some embodiments, the predetermined thickness of the first and second exterior panes comprises at least 1 millimeter. This includes embodiments in which predetermined thickness of the first and second exterior panes **16, 18** comprises at least 2 millimeters, at least 3 millimeters, or at least 4 millimeters. Alternatively, it is contemplated that the predetermined thickness of the first and second exterior panes can be between about 1 millimeter to about 25 millimeters, preferably between about 1.5 millimeters to about 20 millimeters, and more preferred between about 3 millimeters to about 13 millimeters.

In various optional aspects, the predetermined thickness ($EG_t$) of the evacuated gap **30** can be between about 1 to about 50 millimeters; between about 2 to about 40 millimeters; between about 4 to about 30 millimeters, and preferably between about 6 to about 26 millimeters. In another aspect, the predetermined thickness ($EG_t$) of the evacuated gap **30** can be between about 1 to about 26 millimeters.

Similarly, it is contemplated that the pressurized gap **32** can have a predetermined thickness ($PG_t$) of between about 0.5 to about 20 millimeters; between about 1 to about 25 millimeters between about 2 to about 30 millimeters; and preferably between about 3 to about 40 millimeters. Further, the predetermined thickness of the evacuated gap **30** can be substantially the same or differ from the predetermined thickness of the pressurized gap **32**.

In an optional aspect, the dynamic multi-pane assembly can further comprise a spacer assembly disposed between the first exterior pane **16** and the first side **13** of the interior pane **12** for maintaining the desired predetermined thickness of the evacuated gap **30.** In one aspect, it is contemplated that the spacer assembly can be configured to float with respect to the interior pane **12.** The spacer assembly can comprise, without limitation, any physical element or number of elements that contribute to resisting the collapse of the evacuated gap **30** under the total or partial compressive load of the applied vacuum. For example, and without limitation, the spacer assembly can comprise discrete spacers of any size or shape arranged in any pattern in between the first exterior pane **16** and the first side **13** of the interior pane **12,** which can be totally or partially optically clear. In a further aspect, discrete spacers for dynamic multi-pane assembly can include any portion of a spacer assembly comprising individual spacers that, excluding any connections to a gas permeable pane, are unconnected and that are arranged in some pattern in between the first exterior pane **16** and the first side **13** of the interior pane **12.**

In another aspect, the dynamic multi-pane insulating assembly and system **10** further comprises a control assembly **40** that includes a processor **42** that is in communication with the vacuum source **20** and the source of pressurized gas **22.** The vacuum source **20** and/or the source of pressurized gas **22** are configured to be controlled to operate continuously or under active control to maintain vacuum pressure within the evacuated gap **30** at a desired level and/or the pressures within the pressurized gap **32** at a desired set level.

The dynamic multi-pane insulating assembly and system **10** further comprises a first and second pressure sensor **50, 52.** In this aspect, the first pressure sensor **50** is in communication with the processor and the evacuated gap **30** and the second pressure sensor **52** is in communication with the processor and the pressurized gap **32.** In operation, the processor **42,** in response to sensed pressure from at least one of the first and second pressure sensors, is configured to selectively actuate at least one of the vacuum source **20** and the source of pressurized gas **22** to maintain a set level of vacuum within the evacuated gap **30** and a set level of pressure within the pressurized gap **32** at desired levels.

The control assembly **40** can further comprise a third pressure sensor **54** that is in in communication with the external environment. In this aspect, the processor **42,** in response to sensed pressure from the third pressure sensor **54** and at least one of the first and second pressure sensors can be configured to selectively actuate at least one of the vacuum source **20** and the source of pressurized gas **22** to maintain the set level of vacuum within the evacuated gap **30** and a set level of pressure within the pressurized gas **32** at the desired levels.

The control assembly **40** can further comprise a fourth pressure sensor **56** that is in in communication with the environment enclosed by the dynamic multi-pane insulating assembly **10**. In this aspect, the processor **42,** in response to sensed pressure from the fourth pressure sensor **56** and at least one of the first, second, and third pressure sensors can be configured to selectively actuate at least one of the vacuum source **20** and the source of pressurized gas **22** to maintain the set level of vacuum within the evacuated gap **30** and a set level of pressure within the pressurized gap **32** at the desired levels.

The dynamic multi-pane assembly **10** further comprises a frame **60** into which the interior pane **12** and the respective first and second exterior panes **16, 18** are spaceably and sealably mounted. It is further contemplated that the sheets of the interior pane **12** and the respective first and second exterior panes **16, 18** can be hermetically sealed with respect to the frame **60** via conventional IGUs, VIGUs and HVIGUs construction methodologies and materials. By way of example only, and without limitation, an edge seal for hermetically sealing the respective sheets of the interior pane **12** and the respective first and second exterior panes **16, 18** to the frame can comprise a polymer that can further include any of the edge seal technologies currently used for inert gas filled insulating glass units and may include composite, foam, and thermoplastic types of hermitical seals.

In various optional aspects it is contemplated that the interior pane **12** and the respective first and second exterior panes **16, 18** can be spaceably and sealably mounted within the dynamic multi-pane assembly **10** by use of manufacturing processes such as, without limitation, glass pack methodologies; extrusion; and floating gasket methodologies (to form the floating gasket configuration illustrated in Figure 5). Using glass pack manufacturing processes, the interior pane **12** and the respective first and second exterior panes **16, 18,** which comprise three polymeric sheets, can be attached to polymeric frame spacers in a stacking process to create a composite sash that holds the three polymer sheets together. Similarly, an extruded manufacturing process provides for a cross section that is similar to the formed glass pack composite sash configuration and the resulting formed dynamic multi-pane assembly **10** can include the extruded lengths of the polymeric interior pane **12** and the respective polymeric first and second exterior panes **16, 18** that are capped on the respective ends to seal the evacuated gap **30** and the pressurized gap **32**. In another exemplary method, float gasket manufacturing processes can form a dynamic multi-pane assembly **10** in which respective polymeric interior pane **12** and the respective first and second exterior panes **16, 18,** which are formed from glass, are mounted in a frame using gaskets in order to compensate for the thermal expansion differences between the polymer interior pane **12** and the glass sheets (first and second exterior panes **16, 18).**

In one aspect, and as schematically illustrated in Figure 8, a thermal resistant system **2** can further comprise a plurality of dynamic multi-pane assemblies **10.** In this aspect, the thermal resistant system can further comprise at least one vacuum duct **21** in communication with the vacuum source **20** and the evacuated gaps **30** of the plurality of dynamic multi-pane assemblies and at least one pressure duct **23** in communication with the source of pressurized gas **22** and the pressurized gaps **32** of the plurality of dynamic multi-pane assemblies.

In one example, and not meant to be limiting, the at least one vacuum duct **21** can be connected to a vacuum pump or multiple vacuum pumps. It is contemplated that one or more vacuum valves can be provided within the at least one vacuum duct, which can be selectively closed to isolate the vacuum ducts of the coupled dynamic multi-pane assemblies from the atmosphere. In this aspect, closing the vacuum valves allows for the maintenance of vacuum pressures in the evacuated gaps of the coupled dynamic multi-pane assemblies for some period of time, allowing the coupled pump(s) to be turned off for service or removed for replacement. Additional vacuum valves can be provided that can be configured to be selectively closed as a safety measure if there is a likelihood of a power failure. For example, and without limitation, it is contemplated that the vacuum valves can be selectively closed if there is a likelihood of a power failure or of damage to any of the dynamic multi-pane assemblies, if service needs to be performed on the thermal resistant system, there is a system failure, an anticipated or increased likelihood of a system failure, an event that could precipitate a system failure, or an anticipated event that could precipitate a system failure.

It is contemplated that the at least one vacuum valve can be remotely controlled via the processor. For example, and without limitation, the at least one vacuum valves can comprise conventional vacuum valves that are configured to the actuated to selectively close and or open manually, using compressed air, electrical energy (solenoid, motor), spring, or combination of these methods.

Optionally, at least one pressure sensor can be provided in the at least one vacuum duct, which is in communication with the processor, that is configured to initiate a signal to close the vacuum valve if the pressure begins to rise faster than a set rate or exceeds a set value.

Similarly, without limitation, the at least one pressure duct **23** can be connected to a pressure pump or multiple pressure pumps. It is contemplated that one or more pressure valves can be provided within the at least one pressure duct, which can be selectively closed to isolate the pressure ducts of the coupled dynamic multi-pane assemblies from the atmosphere. In this aspect, closing the pressure valves allows for the maintenance of gas pressures in the pressurized gaps of the coupled dynamic multi-pane assemblies for some period of time, allowing the coupled pressure pump(s) to be turned off for service or removed for replacement. Additional pressure valves can be provided that can be configured to be selectively closed as a safety measure if there is a likelihood of a power failure. For example, and without limitation, it is contemplated that the pressure valves can be selectively closed if there is a likelihood of a power failure or of damage to any of the dynamic multi-pane assemblies, if service needs to be performed on the thermal resistant system, there is a system failure, an anticipated or increased likelihood of a system failure, an event that could precipitate a system failure, or an anticipated event that could precipitate a system failure.

It is contemplated that the at least one pressure valve can be remotely controlled via the processor. For example, and without limitation, the at least one pressure valves can comprise conventional pressure valves that are configured to the actuated to selectively close and or open manually, using compressed air, electrical energy (solenoid, motor), spring, or combination of these methods.

Optionally, at least one pressure sensor can be provided in the at least one pressure duct, which is in communication with the processor, that is configured to initiate a signal to close the pressure valve if the pressure begins to fall faster than a set rate or exceeds a set value.

Any valve within the thermal resistant system can be independently open or closed while other valves in the thermal resistant system remain open or closed as desired. Thus, it is contemplated that number or combination of vacuum/pressure valves within the thermal resistant system can be selectively closed while others remain selectively open. Further, any vacuum/pressure valve within the thermal resistant system may be actuated to selectively close or open manually, remotely, or automatically as desired or according to some system parameter such as vacuum pressure, gas pressure, temperature, and the like.

The vacuum/pressure valve within the thermal resistant system **2** can be any commercially available vacuum valve or valve known in the art. Further, it is contemplated that any technologies, any processes, or any methods any of which are known in the art of vacuum/pressure engineering and vacuum/pressure systems can be employed in a thermal resistant system of the present invention that comprises a plurality of dynamic multi-pane assemblies.

The thermal resistant system **2** can provide a means for isolating one or more dynamic multi-pane assemblies in the event that affected dynamic multi-pane assembly's vacuum chamber is compromised. The means for isolating one or more dynamic multi-pane assemblies can comprise a tee valve that is placed in fluid communication with each dynamic multi-pane assembly **10.** The tee valve can be electrically coupled to and selectively controlled via the control assembly **40** so that the thermal resistant system **2** can selectively isolate the failed dynamic multi-pane assembly **10** from the system. Optionally, it is contemplated that selectively controlled tee valves can be assigned to pluralities of dynamic multi-pane assemblies **10,** such as, for example and without limitation, to one of every ten panels, or one of every twenty panels, or one of every thirty panels, and the like, so that potentially failed dynamic multi-pane assemblies **10** can be identified by the thermal resistant system **2** by the identification and isolation of the respective section of the system. It is further contemplated that the control assembly be programmed or otherwise configured to use sorting algorithms to isolate the section of the thermal resistant system **2** containing the failed dynamic multi-pane assemblies **10.**

In a further optional aspect, the thermal resistant system **2** can further comprise a means for removing and/or reducing accumulation of snow thereon the respective exterior panes of the dynamic multi-pane assemblies **10** that form the thermal resistant system **2.** As one will appreciate, in substantially non-vertical applications, such as for skylights, greenhouses, and the like, the transparent exterior panes of the dynamic multi-pane assemblies **10** can accumulate significant amounts of snow in certain environments due to the high R-value of the dynamic multi-pane assemblies **10** forming the thermal resistant system **2,** which can pose both structural and operational problems. Structurally, allowing large amounts of snow to accumulate increases the weight or load on the underlying structure and the respective dynamic multi-pane assemblies **10** and operationally, resting snow can block the desired passage of adequate sunlight from passing through the dynamic multi-pane assemblies **10** and into the formed enclosure. The means for removing and/or reducing accumulation of snow provides the application of warm air from the interior volume of the enclosed structure to be selectively placed into fluid communication with the respective exterior pressurized gaps of the affected dynamic multi-pane assemblies **10.** Operationally, the means for removing and/or reducing accumulation of snow can comprise the steps of turning on the compressor, and opening a pressurized air source shut-off valve as well as a pressurized chamber release valve. Optionally, heating elements can be integrated into the external pressurized air plumbing network to ensure that the warm air being supplied to the pressurized gaps of the affected dynamic multi-pane assemblies **10** is heated to a desired temperature.

It is contemplated that the high R-value of the dynamic multi-pane assemblies **10** forming the thermal resistant system **2,** as shown in the exemplary test data provided below, can be attributed to the vacuum provided in the evacuated gap **30.** It is further contemplated that the maintenance of a higher level of vacuum in the evacuated gap **30** can provide greater resistance to heat transfer across the multi-pane assembly.

Referring now to Figure 11, it is anticipated that moisture may leak into the system or permeate through the external pane. In this aspect, the control assembly of the multi-pane insulating assembly can include a humidity and/or moisture sensor capable of providing an input signal for a feedback control to affect the rate of dry gas passing into and through the pressurized gap. In this aspect, the control assembly can be configured to receive at least one signal from a moisture sensing circuit and at least one signal from a pressure sensing circuit. The signal outputs can include a signal sent to the pressurized air source shut-off valve, pressurized chamber release valve, and/or a signal to power the compressor. In operation, if moisture is sensed in the system beyond a desired threshold, the pressurized air source shut-off valve will open, the pressurized chamber release valve will open, and a signal will turn the compressor's power on. Subsequently, once the moisture within the system is sensed within the desired range, the pressurized air source shut-off valve will close, the pressurized chamber release valve will close, and a signal will turn the compressor's power off. It is contemplated that the purge process will be used intermittently to insure desired moisture levels are present within the pressurized gap.

Referring now to Figure 12, it is anticipated that pressure within the pressurized gap may vary over time and/or as a result of external environmental conditions. In this exemplary aspect, the control assembly of the multi-pane insulating assembly can be coupled to a pair of pneumatic pressure switches. A first pneumatic pressure switch of the pair of pneumatic pressure switches can be placed in communication with the gas source, the pressurized gap, and the power source. A second pneumatic pressure switch of the pair of pneumatic pressure switches can be placed in communication with the vacuum source, the evacuated gap, and the power source. In operation, in a feedback loop, the first pneumatic pressure switch will trigger the compressor or dry gas source to allow more gas into the pressurized gap if the pressurized gap falls under a desired set pressure. Also, in feedback loop operation, the second pneumatic the pressure switch will trigger the vacuum pump to remove gas from the evacuated gap if the vacuum gap rises above the set pressure, the pressure switch will trigger the vacuum pump to remove gas from the evacuated gap. It is contemplated that the control system will control these feedback loops will to operate independently until operator intervention.

**Claims**

1. A dynamic multi-pane assembly (10) comprising:

   an interior pane (12) that is gas permeable;
   a first exterior pane (16) spaced from a first side (13) of the interior pane (12) and defining an evacuated gap (30) between the first side (13) of the interior pane (12) and the first exterior pane (16), the evacuated gap (30) having a predetermined thickness within which a vacuum is drawn;

a second exterior pane (18) spaced from a second side (14) of the interior pane (12) and defining a pressurized gap (32) between the second side (14) of the interior pane (12) and the second exterior pane (18);

a vacuum source (20) in communication with the evacuated gap (30);

a source of pressurized gas (22) in communication with the pressurized gap (32);

a control assembly (40) comprising:

a processor (42) in communication with the source of vacuum (20) and the source of pressurized gas (22);

a first pressure sensor (50) in communication with the processor (42) and the evacuated gap (30); and

a second pressure sensor (52) in communication with the processor (42) and the pressurized gap (32), wherein the processor (42), in response to sensed pressure from at least one of the first and second pressure sensors (50; 52), is adapted to selectively actuate at least one of the source of vacuum (20) and the source of pressurized gas (22) to maintain a set level of vacuum within the evacuated gap (30) and a set level of pressure within the pressurized gap (32) of the dynamic multi-pane assembly (10) at respective desired levels, wherein the source of pressurized gas (22) is pressurized at a set level that is greater than the pressure within the evacuated gap (30), and wherein gas from the pressurized gap (32) permeates through the interior pane (12) and into communication with the evacuated gap (30).

2. The dynamic multi-pane assembly (10) of claim 1, wherein the interior pane (12) is formed of a transparent material, preferably a polymer, more preferably a polycarbonate.

3. The dynamic multi-pane assembly (10) of claim 2, wherein the first and second exterior panes (16; 18) are formed of a transparent material.

4. The dynamic multi-pane assembly (10) of claim 3, wherein at least one of the first and second exterior panes (16; 18) is formed of tempered glass.

5. The dynamic multi-pane assembly (10) of claim 1, wherein the pressurized gas is one of at least air, nitrogen, argon, krypton and xenon.

6. The dynamic multi-pane assembly (10) of claim 1, wherein the pressurized gas is air, and wherein the air has a low relative humidity.

7. The dynamic multi-pane assembly (10) of claim 6, wherein the air has a humidity of less than 30%, preferably a humidity of between about 10% to about 0%.

8. The dynamic multi-pane assembly (10) of claim 1, wherein the predetermined thickness of the evacuated gap (30) is between about 1 to 26 millimeters.

9. The dynamic multi-pane assembly (10) of claim 1, wherein the pressurized gap (32) has a predetermined thickness of between about 3 to 40 millimeters.

10. The dynamic multi-pane assembly (10) of claim 1, wherein the vacuum within the evacuated gap (30) is a partial vacuum.

11. The dynamic multi-pane assembly (10) of claim 1, wherein the source of pressurized gas (22) is pressurized at a set level that is greater than or equal to a barometric pressure of the external environment.

12. The dynamic multi-pane assembly (10) of claim 1, wherein the vacuum within the evacuated gap (30) is adapted to be selectively configured to maintain the thermal resistance of the assembly at a desired level.

13. The dynamic multi-pane assembly (10) of claim 1, further comprising a spacer assembly disposed between the first exterior pane (18) and the first side (13) of the interior pane (12) for maintaining the evacuated gap (30) therebetween.

14. The dynamic multi-pane assembly (10) of claim 13, wherein the spacer assembly is configured to float with respect to the interior pane (12).

15. The dynamic multi-pane assembly (10) of claim 1, wherein the control assembly (40) further comprises a third pressure sensor (54) in communication with the external environment, and wherein the processor (42), in response to sensed pressure from the third pressure sensor (54) and at least one of the first and second pressure sensors (50; 52), is adapted to selectively actuate at least one of the source of vacuum and the source of pressurized gas to maintain the set level of vacuum within the evacuated gap at the desired level.

16. The dynamic multi-pane assembly (10) of claim 1, further comprising a frame, wherein the interior pane (12) and the respective first and second exterior panes (16; 18) are spaceably mounted therein the frame.

17. The dynamic multi-pane assembly (10) of claim 16, wherein the interior pane (12) and the respective first and second exterior panes (16; 18) have a peripheral edge portion, and wherein the peripheral edge portions of the interior pane (12) and the respective first and second exterior panes (16; 18) are hermetically sealed to the frame.

18. A thermal resistant system comprising:

a plurality of dynamic multi-pane assemblies (10), each dynamic multi-pane assembly (10) comprising:

an interior pane (12) that is gas permeable;
a first exterior pane (16) spaced from a first side (13) of the interior pane (12) and defining an evacuated gap (30) between the first side (13) of the interior pane (12) and the first exterior pane (16), the evacuated gap (30) having a predetermined thickness within which a vacuum is drawn;
a second exterior pane (18) spaced from a second side (14) of the interior pane (12) and defining a pressurized gap (32) between the second side (14) of the interior pane (12) and the second exterior pane (18);
a vacuum source (20) in communication with the evacuated gap (30);
a source of pressurized gas (22) in communication with the pressurized gap (32);
a vacuum duct (21) in communication with the vacuum source (20) and the evacuated gaps (30) of each dynamic multi-pane assembly (10) and a pressure duct (23) in communication with the source of pressurized gas (22) and the pressurized gap (32) of each dynamic multi-pane assembly (10);
a control assembly (40) comprising:

a processor (42) in communication with the source of vacuum (20) and the source of pressurized gas (22);
a first pressure sensor (50) in communication with the processor (42) and the vacuum duct (21); and
a second pressure sensor (52) in communication with the processor (42) and the pressurized gap (32), wherein the processor (42), in response to sensed pressure from at least one of the first and second pressure sensors (50, 52), is adapted to selectively actuate at least one of the source of vacuum (20) and the source of pressurized gas (22) to maintain a set level of vacuum within the evacuated gap (30) and a set level of pressure within the pressurized gap of each dynamic multi-pane assembly (10) at respective desired levels; wherein the source of pressurized gas (22) is pressurized at a set level that is greater than the pressure within the evacuated gap (30), wherein, for each dynamic multi-pane assembly (10), gas from the pressurized gap (32) permeates through the interior pane (12) and into communication with the evacuated gap (30), and wherein the vacuum within the evacuated gap (30) can be selectively configured to maintain the thermal resistance of each dynamic multi-pane assembly (10) at a desired level.

19. The thermal resistant system of claim 18, wherein the control assembly (40) further comprises a third pressure sensor (54) in communication with the external environment, and wherein the processor (42), in response to sensed pressure from the third pressure sensor (54) and at least one of the first and second pressure sensors (50, 52), selectively actuates at least one of the source of vacuum (20) and the source of pressurized gas (22) to maintain the set level of vacuum within the evacuated gap (30) and a set level of pressure within the pressurized gaps (32) of each dynamic multi-pane assembly (10) at the respective desired levels.

20. The thermal resistant system of claim 18, wherein the pressurized gas is air, and wherein the air has a humidity of between about 10% to about 0%.

21. The thermal resistant system of claim 18, wherein the vacuum within the evacuated gap (30) is a partial vacuum.

22. The thermal resistant system of claim 18, wherein the source of pressurized gas (22) is pressurized at a set level that is greater than or equal to a barometric pressure of the external environment.

**Patentansprüche**

1. Eine dynamische Mehrscheibenanordnung (10), umfassend:

eine Innenscheibe (12), die gasdurchlässig ist;
eine erste äußere Scheibe (16), die von einer ersten Seite (13) der inneren Scheibe (12) beabstandet ist und einen evakuierten Spalt (30) zwischen der ersten Seite (13) der inneren Scheibe (12) und der ersten äußeren Scheibe (16) definiert, wobei der evakuierte Spalt (30) eine vorbestimmte Dicke aufweist und wobei in dem evakuierten Spalt (30) ein Vakuum gezogen wird;
eine zweite Außenscheibe (18), die von einer zweiten Seite (14) der Innenscheibe (12) beabstandet ist und einen unter Druck gesetzten Spalt (32) zwischen der zweiten Seite (14) der Innenscheibe (12) und der zweiten Außenscheibe (18) definiert;
eine Vakuumquelle (20), die mit dem evakuierten Spalt (30) in Verbindung steht;
eine Quelle (22) von unter Druck gesetztem Gas, die in Verbindung mit dem Unter Druck gesetztem Spalt (32) steht;
eine Steuerungsanordnung (40), umfassend:

einen Prozessor (42), der mit der Vakuumquelle (20) und der Quelle (22) von unter Druck gesetztem Gas verbunden ist;
einen ersten Drucksensor (50), der mit dem Prozessor (42) und dem evakuierten Spalt (30) verbunden ist; und
einen zweiten Drucksensor (52), der mit dem Prozessor (42) und dem unter Druck gesetzten Spalt (32) verbunden ist,
wobei der Prozessor (42) in Reaktion auf von mindestens einem der ersten und zweiten Drucksensoren (50; 52) erfassten Druck selektiv die Vakuumquelle (20) und/oder die Quelle (22) von unter Druck gesetztem Gas betätigen kann, um ein eingestelltes Vakuumniveau in dem evakuierten Spalt (30) und ein eingestelltes Druckniveau in dem unter Druck gesetzten Spalt (32) jeder dynamischen Mehrscheibenanordnung (10) auf den jeweils gewünschten Niveaus zu halten, wobei die Quelle (22) von unter Druck gesetztem Gas mit einem eingestellten Druckniveau beaufschlagt wird, das größer ist als der Druck in dem evakuierten Spalt (30), und wobei Gas aus dem unter Druck gesetzten Spalt (32) durch die Innenscheibe (12) und in Verbindung mit dem evakuierten Spalt (30) dringt.

2. Dynamische Mehrscheibenanordnung (10) nach Anspruch 1, wobei die Innenscheibe (12) aus einem transparenten Material, vorzugsweise einem Polymer, besonders bevorzugt einem Polycarbonat, gebildet ist.

3. Dynamische Mehrscheibenanordnung (10) nach Anspruch 2, wobei die erste und die zweite Außenscheibe (16; 18) aus einem transparenten Material bestehen.

4. Dynamische Mehrscheibenanordnung (10) nach Anspruch 3, wobei mindestens eine der ersten und zweiten Außenscheiben (16; 18) aus gehärtetem Glas besteht.

5. Dynamische Mehrscheibenanordnung (10) nach Anspruch 1, wobei das unter Druck stehende Gas mindestens eines der Gase Luft, Stickstoff, Argon, Krypton und Xenon ist.

6. Dynamische Mehrscheibenanordnung (10) nach Anspruch 1, wobei das unter Druck stehende Gas Luft ist und die Luft eine niedrige relative Feuchtigkeit aufweist.

7. Dynamische Mehrscheibenanordnung (10) nach Anspruch 6, wobei die Luft eine Feuchtigkeit von weniger als 30 %, vorzugsweise eine Feuchtigkeit zwischen etwa 10 % und etwa 0 % aufweist.

8. Dynamische Mehrscheibenanordnung (10) nach Anspruch 1, wobei die vorbestimmte Dicke des evakuierten Spalts (30) zwischen etwa 1 und 26 Millimeter beträgt.

9. Dynamische Mehrscheibenanordnung (10) nach Anspruch 1, wobei der unter Druck gesetzte Spalt (32) eine vorbestimmte Dicke zwischen etwa 3 und 40 Millimetern aufweist.

10. Dynamische Mehrscheibenanordnung (10) nach Anspruch 1, wobei das Vakuum in dem evakuierten Spalt (30) ein Teilvakuum ist.

11. Dynamische Mehrscheibenanordnung (10) nach Anspruch 1, wobei die Quelle (22) von unter Druck gesetztem Gas mit einem Druckniveau beaufschlagt wird, der größer oder gleich dem barometrischen Druck der äußeren Umgebung ist.

12. Dynamische Mehrscheibenanordnung (10) nach Anspruch 1, wobei das Vakuum in dem evakuierten Spalt (30) derart ausgelegt ist, dass es selektiv konfiguriert werden kann, um den Wärmewiderstand der Anordnung auf einem gewünschten Niveau zu halten.

13. Dynamische Mehrscheibenanordnung (10) nach Anspruch 1, ferner umfassend eine Abstandshalteranordnung, die zwischen der ersten Außenscheibe (18) und der ersten Seite (13) der Innenscheibe (12) angeordnet ist, um den dazwischen angeordneten evakuierten Spalt (30) zu erhalten.

14. Dynamische Mehrscheibenanordnung (10) nach Anspruch 13, wobei die Abstandshalteranordnung derart gestaltet ist, dass sie in Bezug auf die Innenscheibe (12) schwimmt.

15. Dynamische Mehrscheibenanordnung (10) nach Anspruch 1, wobei die Steuerungsanordnung (40) ferner einen dritten Drucksensor (54) umfasst, der mit der äußeren Umgebung in Verbindung steht, und wobei der Prozessor (42) als Reaktion auf den von dem dritten Drucksensor (54) und mindestens einem der ersten und zweiten Drucksensoren (50; 52) erfassten Druck derart eingestellt ist ist, dass er selektiv die Vakuumquelle und/oder die Quelle von unter Druck gesetztem Gas betätigt, um das eingestellte Vakuumniveau innerhalb des evakuierten Spalts auf dem gewünschten Niveau zu halten.

16. Dynamische Mehrscheibenanordnung (10) nach Anspruch 1, ferner umfassend einen Rahmen, wobei die Innenscheibe (12) und die jeweilige erste und zweite Außenscheibe (16; 18) platzsparend in dem Rahmen befestigt sind.

17. Dynamische Mehrscheibenanordnung (10) nach Anspruch 16, wobei die Innenscheibe (12) und die jeweilige erste und zweite Außenscheibe (16; 18) einen peripheren Randabschnitt aufweisen, und wobei die peripheren Randabschnitte der Innenscheibe (12) und der jeweiligen ersten und zweiten Außenscheibe (16; 18) hermetisch mit dem Rahmen abgedichtet sind.

18. Ein Wärmewiderstandsystem, umfassend:
eine Mehrzahl von dynamischen Mehrscheibenanordnungen (10), wobei jede dynamische Mehrscheibenanordnung (10) umfasst:

eine Innenscheibe (12), die gasdurchlässig ist;
eine erste äußere Scheibe (16), die von einer ersten Seite (13) der inneren Scheibe (12) beabstandet ist und einen evakuierten Spalt (30) zwischen der ersten Seite (13) der inneren Scheibe (12) und der ersten äußeren Scheibe (16) definiert, wobei der evakuierte Spalt (30) eine vorbestimmte Dicke aufweist und wobei in dem evakuierten Spalt (30) ein Vakuum gezogen wird;
eine zweite Außenscheibe (18), die von einer zweiten Seite (14) der Innenscheibe (12) beabstandet ist und einen unter Druck gesetzten Spalt (32) zwischen der zweiten Seite (14) der Innenscheibe (12) und der zweiten Außenscheibe (18) definiert;
eine Vakuumquelle (20), die mit dem evakuierten Spalt (30) in Verbindung steht;
eine Quelle (22) von unter Druck gesetztem Gas, die in Verbindung mit dem unter Druck gesetzten Spalt (32) steht;
eine Vakuumleitung (21), die mit der Vakuumquelle (20) und den evakuierten Zwischenräumen (30) jeder dynamischen Mehrscheibenanordnung (10) in Verbindung steht, und eine Druckleitung (23), die mit der Quelle (22) von unter Druck gesetztem Gas und dem unter Druck gesetzten Zwischenraum (32) jeder dynamischen Mehrscheibenanordnung (10) in Verbindung steht;
eine Steuerungsanordnung (40), umfassend:

einen Prozessor (42), der mit der Vakuumquelle (20) und der Quelle (22) von unter Druck gesetztem Gas verbunden ist;
einen ersten Drucksensor (50), der mit dem Prozessor (42) und der Vakuumleitung (21) verbunden ist; und
einen zweiten Drucksensor (52), der mit dem Prozessor (42) und dem unter Druck gesetzten Spalt (32) verbunden ist,
wobei der Prozessor (42) als Reaktion auf den von mindestens einem der ersten und zweiten Drucksensoren (50, 52) erfassten Druck derart eingerichtet ist, dass er selektiv die Vakuumquelle (20) und/oder die Quelle (22) von unter Druck gesetztem Gas betätigt, um ein eingestelltes Vakuumniveau in dem evakuierten Spalt (30) und ein eingestelltes Druckniveau in dem unter Druck gesetzten Spalt jeder dynamischen Mehrscheibenanordnung (10) auf jeweils gewünschten Niveaus zu halten,

wobei die Quelle (22) von unter Druck gesetztem Gas auf einem eingestellten Druckniveau unter Druck gesetzt wird, das größer ist als der Druck innerhalb des evakuierten Spalts (30), wobei für jede dynamische Mehrscheibenanordnung (10) Gas aus dem unter Druck gesetzten Spalt (32) durch die Innenscheibe (12) und in Verbindung mit dem evakuierten Spalt (30) dringt, und wobei das Vakuum innerhalb des evakuierten Spalts (30) selektiv konfiguriert werden kann, um den Wärmewiderstand jeder dynamischen Mehrscheibenanordnung (10) auf einem gewünschten Niveau zu halten.

19. Wärmewiderstandsystem nach Anspruch 18, wobei die Steuerungsanordnung (40) ferner einen dritten Drucksensor (54) umfasst, der mit der äußeren Umgebung in Verbindung steht, und wobei der Prozessor (42) in Reaktion auf den vom dritten Drucksensor (54) und mindestens einem der ersten und zweiten Drucksensoren (50, 52), selektiv die Vakuumquelle (20) und/oder die Quelle (22) von unter Druck gesetztem Gas betätigt, um das eingestellte Vakuumniveau innerhalb des evakuierten Spalts (30) und ein eingestelltes Druckniveau innerhalb der unter Druck gesetzten Spalte (32) jeder dynamischen Mehrscheibenanordnung (10) auf den jeweiligen gewünschten Niveaus zu halten.

20. Wärmewiderstandsystem nach Anspruch 18, wobei das unter Druck stehende Gas Luft ist und die Luft eine Feuchtigkeit zwischen etwa 10 % und etwa 0 % aufweist.

21. Wärmewiderstandsystem nach Anspruch 18, wobei das Vakuum in dem evakuierten Spalt (30) ein Teilvakuum ist.

22. Dynamische Mehrscheibenanordnung nach Anspruch 18, bei der die Quelle (22) von unter Druck gesetztem Gas mit einem Druck beaufschlagt wird, der größer oder gleich dem barometrischen Druck der äußeren Umgebung ist.

**Revendications**

1. Ensemble multi-panneau dynamique (10) comprenant :

un panneau intérieur (12) qui est perméable aux gaz ;
un premier panneau extérieur (16) espacé d'un premier côté (13) du panneau intérieur (12) et définissant un espace libre évacué (30) entre le premier côté (13) du panneau intérieur (12) et le premier panneau extérieur (16), l'espace libre évacué (30) ayant une épaisseur dans laquelle un vide est tiré ;
un second panneau extérieur (18) espacé d'un second côté (14) du panneau intérieur (12) et définissant un espace libre pressurisé (32) entre le second côté (14) du panneau intérieur (12) et le second panneau extérieur (18) ;
une source de vide (20) en communication avec l'espace libre évacué (30) ;
une source de gaz pressurisé (22) en communication avec l'espace libre pressurisé (32) ;
un ensemble de commande (40) comprenant :

un processeur (42) en communication avec la source de vide (20) et la source de gaz pressurisé (22) ;
un premier capteur de pression (50) en communication avec le processeur (42) et l'espace libre évacué (30) ; et
un second capteur de pression (52) en communication avec le processeur (42) et l'espace libre pressurisé (32),
le processeur (42), en réponse à la pression captée à partir d'au moins un des premier et second capteurs de pression (50 ; 52), étant adapté pour sélectivement actionner au moins une de la source de vide (20) et de la source de gaz pressurisé (22) pour maintenir un niveau réglé de vide dans l'espace libre évacué (30) et un niveau réglé de pression dans l'espace libre pressurisé (32) de l'ensemble multi-panneau dynamique (10) à des niveaux souhaités respectifs, la source de gaz pressurisée (22) étant pressurisée à un niveau réglé qui est plus grand que la pression dans l'espace libre évacué (30) et le gaz de l'espace libre pressurisé (32) perméant à travers le panneau intérieur (12) et en communication avec l'espace libre évacué (30).

2. Ensemble multi-panneau dynamique (10) selon la revendication 1, dans lequel le panneau intérieur (12) est formé d'un matériau transparent, de préférence un polymère, davantage de préférence un polycarbonate.

3. Ensemble multi-panneau dynamique (10) selon la revendication 2, dans lequel les premier et second panneaux extérieurs (16 ; 18) sont formés d'un matériau transparent.

4. Ensemble multi-panneau dynamique (10) selon la revendication 3, dans lequel au moins un des premier et second panneaux extérieurs (16 ; 18) est formé d'un verre trempé.

5. Ensemble multi-panneau dynamique (10) selon la revendication 1, dans lequel le gaz pressurisé est un d'au moins l'air, l'azote, l'argon, le krypton et le xénon.

6. Ensemble multi-panneau dynamique (10) selon la revendication 1, dans lequel le gaz pressurisé est l'air et l'air ayant une humidité relative faible.

7. Ensemble multi-panneau dynamique (10) selon la revendication **6,** dans lequel l'air a une humidité de moins de 30 %, de préférence une humidité comprise entre environ 10 % à environ 0 %.

8. Ensemble multi-panneau dynamique (10) selon la revendication **1,** dans lequel l'épaisseur prédéterminée de l'espace libre évacué (30) est comprise entre environ 1 à 26 millimètres.

9. Ensemble multi-panneau dynamique (10) selon la revendication **1,** dans lequel l'espace libre pressurisé (32) a une épaisseur prédéterminée comprise entre environ 3 à 40 millimètres.

10. Ensemble multi-panneau dynamique (10) selon la revendication 1, dans lequel le vide dans l'espace libre évacué (30) est un vide partiel.

11. Ensemble multi-panneau dynamique (10) selon la revendication 1, dans lequel la source de gaz pressurisé (22) est pressurisée à un niveau réglé qui est supérieur ou égal à une pression barométrique de l'environnement externe.

12. Ensemble multi-panneau dynamique (10) selon la revendication 1, dans lequel le vide dans l'espace libre évacué (30) est adapté pour être sélectivement configuré pour maintenir la résistance thermique de l'ensemble à un niveau souhaité.

13. Ensemble multi-panneau dynamique (10) selon la revendication 1, comprenant en outre un ensemble d'espaceur disposé entre le premier panneau extérieur (18) et le premier côté (13) du panneau intérieur (12) pour maintenir l'espace libre évacué (30) entre eux.

14. Ensemble multi-panneau dynamique (10) selon la revendication 13, dans lequel l'ensemble d'espaceur est configuré pour flotter par rapport au panneau intérieur (12).

15. Ensemble multi-panneau dynamique (10) selon la revendication 1, dans lequel l'ensemble de commande (40) comprend en outre un troisième capteur de pression (54) en communication avec l'environnement externe et dans lequel le processeur (42), en réponse à la pression captée à partir du troisième capteur de pression (54) et d'au moins un des premier et deuxième capteurs de pression (50 ; 52), est adapté pour sélectivement actionner au moins une de la source de vide et de la source de gaz pressurisé pour maintenir le niveau réglé de vide dans l'espace libre évacué au niveau souhaité.

16. Ensemble multi-panneau dynamique (10) selon la revendication 1, comprenant en outre un cadre, le panneau intérieur (12) et les premier et second panneaux extérieurs respectifs (16 ; 18) étant montés dans l'espace à l'intérieur du cadre.

17. Ensemble multi-panneau dynamique (10) selon la revendication 16, dans lequel le panneau intérieur (12) et les premier et second panneaux extérieurs respectifs (16 ; 18) ont une portion de bord périphérique et les portions de bord périphériques du panneau intérieur (12) et des premier et second panneaux extérieurs respectifs (16 ; 18) étant scellés hermétiquement au cadre.

18. Système résistant thermique comprenant :
une pluralité d'ensembles multi-panneaux dynamiques (10), chaque ensemble multi-panneau dynamique (10) comprenant :

un panneau intérieur (12) qui est perméable aux gaz ;

un premier panneau extérieur (16) espacé d'un premier côté (13) du panneau intérieur (12) et définissant un espace évacué (30) entre le premier côté (13) du panneau extérieur (12) et le premier panneau extérieur (16), l'espace libre évacué (30) ayant une épaisseur prédéterminée dans laquelle un vide est tiré ;

un second panneau extérieur (18) espacé d'un second côté (14) du panneau intérieur (12) et définissant un espace libre pressurisé (32) entre le second côté (14) du panneau intérieur (12) et le second panneau extérieur (18) ;

une source de vide (20) en communication avec l'espace libre évacué (30) ;

une source de gaz pressurisé (22) en communication avec l'espace libre pressurisé (32) ;

un conduit de vide (21) en communication avec la source de vide (20) et les espaces libres évacués (30) de chaque ensemble multi-panneau dynamique (10) et un conduit de pression (23) en communication avec la source de gaz pressurisé (22) et l'espace libre pressurisé (32) de chaque ensemble multi-panneau dynamique (10) ;

un ensemble de commande (40) comprenant :

un processeur (42) en communication avec la source de vide (20) et la source de gaz pressurisé (22) ;

un premier capteur de pression (50) en communication avec le processeur (42) et le conduit de vide (21) ; et

un second capteur de pression (52) en communication avec le processeur (42) et le gaz pressurisé (32), le processeur (42), en réponse à une pression captée d'au moins un des premier et second capteurs de pression (50, 52), étant adapté pour sélectivement actionner au moins une de la source de vide (20) et de la source de gaz pressurisé (22) pour maintenir un niveau réglé de vide dans l'espace libre évacué (30) et un niveau réglé de pression dans l'espace libre pressurisé de chaque ensemble multi-panneau dynamique (10) à des niveaux respectifs souhaités ;

la source de gaz pressurisé (22) étant pressurisée à un niveau réglé qui est plus grand que la pression dans l'espace libre évacué (30), pour chaque ensemble multi-panneau dynamique (10), le gaz de l'espace libre pressurisé (32) perméant à travers le panneau intérieur (12) et en communication avec l'espace libre évacué (30) et le vide dans l'espace libre évacué (30) pouvant être sélectivement configuré pour maintenir la résistance thermique de chaque ensemble multi-panneau dynamique (10) à un niveau souhaité.

19. Système résistant thermique selon la revendication 18, dans lequel l'ensemble de commande (40) comprend en outre un troisième capteur de pression (54) en communication avec l'environnement externe et le processeur (42), en réponse à la pression captée par le troisième capteur de pression (54) et au moins un des premier et deuxième capteurs de pression (50, 52), actionnant sélectivement au moins une de la source de vide (20) et de la source de gaz pressurisé (22) pour maintenir le niveau réglé de vide dans l'espace libre évacué (30) et un niveau réglé de pression dans les espaces libres pressurisés (32) de chaque ensemble multi-panneau dynamique (10) aux niveaux souhaités respectifs.

20. Système résistant thermique selon la revendication 18, dans lequel le gaz pressurisé est l'air et l'air ayant une humidité comprise entre environ 10 % à environ 0 %.

21. Système résistant thermique selon la revendication 18, dans lequel le vide dans l'espace libre évacué (30) est un vide partiel.

22. Système résistant thermique selon la revendication 18, dans lequel la source de gaz pressurisé (22) est pressurisée à un niveau réglé qui est supérieur ou égal à une pression barométrique de l'environnement externe.

## FIG. 1

## FIG. 2

FIG. 3

FIG. 4

gas permeable
or non-permeable pressurized chamber 32    18    12

floating
gaskets

gas permeable

non-permeable    vacuum chamber 30    16    peripheral
spacer

# FIG. 5

Pressurized
Chamber
Exhaust    EXPt    PGt    GPPt    14    18    12    32    gas source

22

20

Peripheral
spacer    EGt    13    30    16    vacuum
source

# FIG. 6A

Pressurized
Chamber
Exhaust    EXPt    PGt    GPPt    14    18    32    gas source

22

20

Peripheral
spacer    EGt    13    30    12    16    vacuum
source

# FIG. 6B

FIG. 7A

FIG. 7B

FIG. 7C

FIG. 7D

**Pressurized Air Source Shut-off Valve**

Pressurized Auxiliary Tank

Desiccant Dryer

Filter

*22*

*23*

*40*

*42*

Power Source

Pressurized Chamber Release Valve

Vacuum Chamber Panel Isolation Valve

*21*

Vacuum Auxiliary Tank

*20*

Vacuum Source Shut-off Valve

FIG. 8

Pressurized Air Source
Shut-off Valve

Pressurized
Auxiliary
Tank

Desiccant
Dryer

Filter

*22*

*23*

*52*

*56*

*54*

*40*

*42*

Power
Source

Pressurized
Chamber Release
Valve

Vacuum Chamber
Panel Isolation Valve

*50*

Vacuum
Auxiliary
Tank

*21*

Vacuum Source
Shut-off Valve

*20*

# FIG. 9

**FIG. 10**

FIG. 11

Pressurized Auxiliary Tank

Desiccant Dryer

Filter

22

23

Pressurized Chamber Release Valve

Gas Source Pressure Switch

Power Source

Vacuum Source Pressure Switch

P

P

21

Vacuum Auxiliary Tank

20

FIG. 12

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018223590 A1